(19)

Europäisches
Patentamt
European
Patent Office
Office européen
des brevets

(11) **EP 4 231 188 A1**

(12) **EUROPEAN PATENT APPLICATION**

(43) Date of publication:
**23.08.2023 Bulletin 2023/34**

(21) Application number: **22186213.9**

(22) Date of filing: **21.07.2022**

(51) International Patent Classification (IPC):
**G06F 21/64** (2013.01)

(52) Cooperative Patent Classification (CPC):
**G06F 21/64**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.02.2022 KR 20220022647
05.04.2022 KR 20220042136
30.05.2022 KR 20220065941**

(71) Applicant: **DT international Co., Ltd
Gangnam-gu
Seoul (KR)**

(72) Inventor: **Woo, Jung Eun
Seoul (KR)**

(74) Representative: **Lermer, Christoph
LermerRaible Patent- u. Rechtsanwalts
PartGmbB
Lessingstrasse 6
80336 München (DE)**

(54) **AI AND BLOCKCHAIN-BASED WAREHOUSE USE SYSTEM AND METHOD OF USING WAREHOUSE USING THE SAME**

(57) The present disclosure relates to an artificial intelligence (AI) and blockchain-based warehouse use system and a method of using a warehouse using the same, and more particularly, to an AI and blockchain-based warehouse use system which enables a user to check present use states of warehouses for each area and has improved security, and a method of using a warehouse using the same. The present disclosure relates to a warehouse use system using a blockchain in which a plurality of nodes is connected over a communication network, and includes a plurality of warehouse owner terminals each being a node of the blockchain and configured to generate a data block comprising warehouse information and store the data block in the blockchain and a user terminal being a node of the blockchain and configured to output classification information generated by classifying, for each area, a plurality of pieces of warehouse information stored in the blockchain. One or more of the warehouse owner terminal and the user terminal includes a recommendation unit configured to recommend any one of multiple warehouses by using the warehouse information and user information.

[Fig.1]

EP 4 231 188 A1

**Description**

**BACKGROUND**

1. Technical Field

The present disclosure relates to an artificial intelligence (AI) and blockchain-based warehouse use system and a method of using a warehouse using the same, and more particularly, to an AI and blockchain-based warehouse use system which enables a user to check present use states of warehouses for each area and has improved security, and a method of using a warehouse using the same.

2. Related Art

A warehouse is a building for storing or keeping goods or materials. In general, the owner of goods pays a fee that is determined by a location, size, use time, etc. of a warehouse, and uses the warehouse.

Blockchain is a technology having, as a core concept, decentralization that is aimed at P2P transactions in which not a central server, but all communities that participate in a network record and manage the transactions of ledger data on which transaction information has been recorded.

In the blockchain, a "block" becomes a ledger on which data of a peer to peer transaction (P2P) is recorded.

In the existing financial system, financial companies keep transaction records in their central servers. In contrast, in the blockchain based on the P2P method, transaction information is contained in blocks, and the blocks are sequentially connected and shared by all participants.

In the conventional technology, the central servers have only to be attacked in order to falsify or tamper data. However, the blockchain has an advantage in that falsification or tampering is difficult because data is distributed and stored.

Korean Patent Application Publication No. 10-2015-0066178 (hereinafter referred to as a "conventional technology") relates to a system for supporting a distribution state of materials. More specifically, the system can check an inventory history within a warehouse through communication with a short-distance wireless communication chip that is attached to each place (e.g., a warehouse) in which materials are kept.

The owner of goods makes contact with an owner (i.e., the owner of a warehouse) in order to check an inventory state of the warehouse and to use the warehouse. The conventional technology can check an inventory state of one warehouse, but has problems in that it is difficult to check use states of warehouses present in a desired area and the warehouses are vulnerable to security.

**SUMMARY**

Various embodiments are directed to providing an artificial intelligence (AI) and blockchain-based warehouse use system which has excellent security and enables the owner of goods (or a user) to check use states of warehouses in a desired area, and a method of using a warehouse using the same.

Furthermore, various embodiments are directed to providing an AI and blockchain-based warehouse use system which enable multiple warehouse owners to check use states of warehouses for each area, and a method of using a warehouse using the same.

Furthermore, various embodiments are directed to providing an AI and blockchain-based warehouse use system which enables the owner of goods to make a reservation for a warehouse by taking expenses into consideration, and a method of using a warehouse using the same.

The present disclosure having the objects of solving the problems has the following construction and characteristics.

In an embodiment, a warehouse use system using a blockchain in which a plurality of nodes is connected over a communication network includes a plurality of warehouse owner terminals each being a node of the blockchain and configured to generate a data block including warehouse information and store the data block in the blockchain and a user terminal being a node of the blockchain and configured to output classification information generated by classifying, for each area, a plurality of pieces of warehouse information stored in the blockchain.

Furthermore, the warehouse use system further includes an operator terminal being a node of the blockchain. One or more of the warehouse owner terminal, the user terminal, and the operator terminal generates a data block including map information in which the multiple areas are indicated and stores the data block in the blockchain. The user terminal may include an output unit configured to receive and output the map information, an input unit configured to generate selection information that selects any one of the multiple areas from the map information, a matching unit configured to receive the selection information and transmit, to the output unit, the classification information corresponding to any one of the multiple areas, and a reservation unit configured to generate a data block including reservation information on a use of the warehouses and store the data block in the blockchain.

Furthermore, the warehouse use system further includes an operator terminal being a node of the blockchain. One or more of the warehouse owner terminal, the user terminal, and the operator terminal may include a calculation unit configured to calculate a moving distance by using source location information received from the user terminal and the warehouse information, and calculate transportation expenses by using the moving distance and operating expenses for a cargo vehicle, and a recommendation unit configured to recommend any one of multiple warehouses by using the transportation expenses and the warehouse information.

A method of using a warehouse using a blockchain-based warehouse use system includes step S1 of generating a data block including the warehouse information through the warehouse owner terminal and storing the data block in the blockchain; and step S2 of outputting the classification information generated by classifying the plurality of pieces of warehouse information for each area through the user terminal.

The present disclosure having the construction and characteristics has effects in that it has excellent security and the owner of goods can check use states of warehouses in a desired area.

Furthermore, the present disclosure has an effect in that multiple warehouse owners can also check use states of warehouses for each area.

Furthermore, the present disclosure has an effect in that the owner of goods can perform a warehouse reservation by taking expenses into consideration.

## BRIEF DESCRIPTION OF THE DRAWINGS

FIG. 1 is a schematic block diagram for describing a blockchain-based warehouse use system according to an embodiment of the present disclosure.

FIG. 2 is a schematic block diagram for describing users who use the blockchain-based warehouse use system, and a warehouse reservation process.

FIG. 3 is a schematic flowchart for describing a method of using a warehouse using a blockchain-based warehouse use system according to an embodiment of the present disclosure.

FIG. 4 is a diagram for describing the state in which map information and classification information (i.e., warehouse information for each area) have been output.

FIG. 5 is a diagram for describing a process of calculating, by a calculation unit, a moving distance.

FIG. 6 is a diagram for describing an A-star algorithm.

FIG. 7 is a diagram for describing layers of blockchain.

FIG. 8 is a schematic flowchart for describing data within blockchain and that the data is transmitted to an access apparatus.

FIG. 9 is a diagram for describing the state in which dotted lines are output in an additional embodiment of the present disclosure.

FIG. 10 is a diagram for describing filling icons in an additional embodiment of the present disclosure.

FIG. 11 is a schematic block diagram for describing a prediction technology structure diagram.

FIG. 12 is a schematic block diagram for describing a prediction module.

## DETAILED DESCRIPTION

The present disclosure may be changed in various ways and may have various forms. Aspects (or embodiments) are to be specifically described in the specification. It is however to be understood that the present disclosure is not intended to be limited to a specific disclosure form and that the present disclosure includes all changes, equivalents, and substitutions which fall within the spirit and technical scope of the present disclosure.

Terms used in this specification are used to only describe specific aspects (or embodiments) and are not intended to restrict the present disclosure. An expression of the singular number includes an expression of the plural number unless clearly defined otherwise in the context. In this specification, a term, such as "include (or comprise)" or "have", is intended to designate the presence of a characteristic, a number, a step, an operation, an element, a part or a combination of them described in the specification, and should be understood that it does not exclude the existence or possible addition of one or more other characteristics, numbers, steps, operations, elements, parts, or combinations of them in advance.

All terms used herein, including technical terms or scientific terms, have the same meanings as those commonly understood by a person having ordinary knowledge in the art to which the present disclosure pertains, unless defined otherwise in the specification. Terms, such as those defined in commonly used dictionaries, should be construed as having the same meanings as those in the context of a related technology, and are not construed as ideal or excessively formal meanings unless explicitly defined otherwise in the application.

Terms, such as "a first" and "a second" described in this specification, are used to merely distinguish between different elements, and are not restricted by a fabricated sequence. The names of elements may not be the same in the detailed description and claims of the present disclosure.

Throughout the specification, when it is described that one part is "connected" to another part, this includes a case where the one part is "indirectly connected (including a physical connection and an electrical connection in a way to be capable of communication)" to the another part with a still another element interposed therebetween in addition to a case where the one part is "directly connected (including a physical connection and an electrical connection in a way to be capable of communication)" to the another part.

Various embodiments of this document may be implemented as software (e.g., a program or application) including one or more instructions stored in a storage medium (e.g., a memory) readable by a machine (or a terminal). For example, a processor of a machine may invoke at least one of the one or more instructions stored in the storage medium, and may execute the instruction. This enables the machine to operate to perform at least one function based on the invoked at least one instruction. The one or more instructions may include a code generated by a complier or a code executable by an interpreter. The machine-readable storage media may be provided in the form of a non-transitory storage medium. In this case, "non-transitory" merely means that the storage medium is a tangible device and does not include a signal (e.g., electromagnetic waves). The term does not distinguish between a case where data is semi-permanently stored in the storage medium and a case where data is temporally stored in the storage medium.

A method according to various embodiments disclosed in this document may be included in a computer program product and provided. The computer program product may be traded as a product between a seller and a purchaser. The computer program product may be distributed in the form of a machine-readable storage medium (e.g., a compact disc read only memory (CD-ROM)) or may be distributed through an app store or directly between two user devices (e.g., smartphones) or online (e.g., download or upload). In the case of the online distribution, at least some of the computer program product may be at least temporarily stored or provisionally generated in a machine-readable storage medium, such as the memory of the server of a manufacturer, the server of an app store, or a relay server.

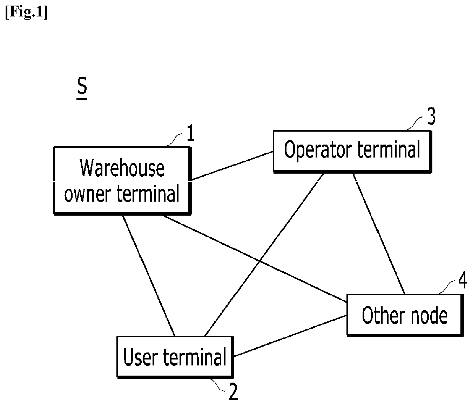

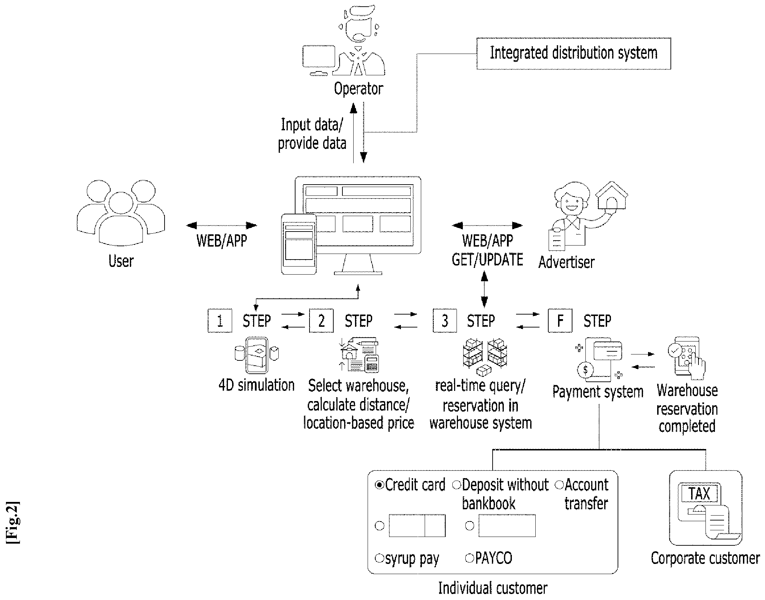

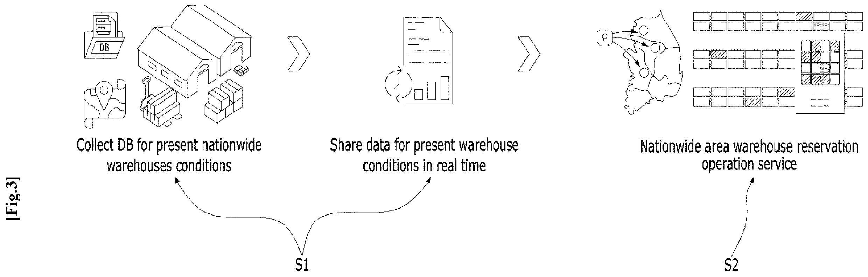

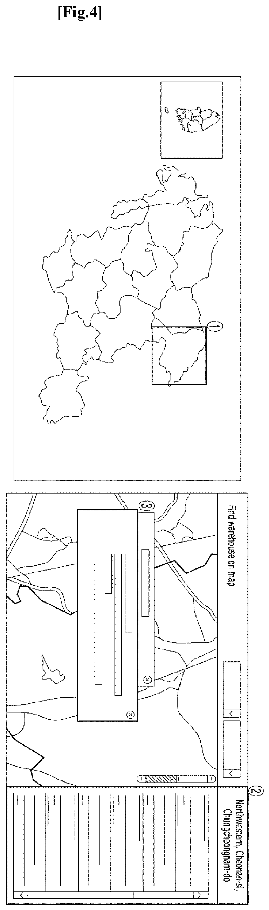

FIG. 1 is a schematic block diagram for describing a blockchain-based warehouse use system according to an embodiment of the present disclosure. FIG. 2 is a schematic block diagram for describing users who use the blockchain-based warehouse use system, and a warehouse reservation process. FIG. 3 is a schematic flowchart for describing a method of using a warehouse using a blockchain-based warehouse use system according to an embodiment of the present disclosure. FIG. 4 is a diagram for describing the state in which map information and classification information (i.e., warehouse information for each area) have been output.

An AI and blockchain-based warehouse use system S according to an embodiment of the present disclosure is a warehouse use system using artificial intelligence (AI) and blockchain in which a plurality of nodes is connected over a communication network (a communication network including at least one of a wired communication network and a wireless communication network), and is hereinafter referred to as "the present system", for convenience of description.

A blockchain technology, that is, a distributed ledger technology, is a technology in which computer devices participate and a complete distributed database is maintained in common. The blockchain technology is characterized by decentralization, scalability, and transparency. Each computer device may take part in database records, and database synchronization may be rapidly implemented therebetween.

The blockchain consists of (1) a P2P network layer based on a gossip protocol, (2) a consensus algorithm that consents to common data between distributed nodes, (3) a data structure having a Merkle tree form in which a consented state is stored, and (4) a digital encryption algorithm for guaranteeing the safety of the identity of an account and recorded information. The blockchain may be said to be an append-only infinite state machine in which the four elements are combined and transactions are used for a state change.

The blockchain is a known technology which is used in various fields, and a more detailed description thereof is omitted.

Referring to FIGS. 1 to 3, the present system (i.e., the blockchain-based warehouse use system S according to an embodiment of the present disclosure) includes a plurality of warehouse owner terminals 1 and a user terminal 2.

The warehouse owner terminal 1 is a node of the blockchain (the node participates as a node of the blockchain), and it generates a data block including warehouse information and stores the data block in the blockchain (stores the data block in nodes) (refer to S1 in FIG. 3). The warehouse owner terminal 1 may be provided in plural in the present system.

The warehouse owner terminal 1 is a terminal (e.g., a smartphone, a tablet, or a PC) that is used by a warehouse owner. The warehouse owner terminal 1 receives warehouse information through an input module (e.g., a touch screen) of the warehouse owner terminal 1, and generates a data block including warehouse information.

In this case, the warehouse information may include a location of a warehouse, whether the warehouse is available for each time zone, a cost of warehouse use, warehouse owner information, a warehouse size, etc.

Various control elements (e.g., various electronic devices or electronic modules, such as a computer and a processor) known to those skilled in the art may be applied to the warehouse owner terminal 1, the user terminal 2 and an operator terminal 3 to be described later, etc. For example, each of the warehouse owner terminal 1, the user terminal 2, and the operator terminal 3 may be an element that transmits, to each of the warehouse owner terminal 1, the user terminal 2, and the operator terminal 3, a signal or instruction generated based on a program or algorithm included therein. For example, the warehouse owner terminal 1, the user terminal 2, and the operator terminal 3 may be separately provided, and each may be connected to each of the warehouse owner terminal 1, the user terminal 2, and the operator terminal 3 in a wired or wireless way.

A data block including warehouse information may be stored in (or registered with) the warehouse owner terminal 1 because the warehouse owner terminal 1 is a node of the blockchain as described above.

Referring to FIGS. 1 to 4, the user terminal 2 is a node (i.e., a node that participates in the blockchain) of the blockchain, and outputs classification information generated by classifying for each area a plurality of pieces of warehouse information (i.e., warehouse information received from the plurality of warehouse owner terminals 1) that has been stored in the blockchain.

A warehouse owner, a user, an operator, a transporter, etc. who use the warehouse owner terminal 1, the user terminal 2, the operator terminal 3, and a terminal (e.g., a transporter terminal), that is, another node, may access a data block that is stored in the blockchain by using a private key, a password, etc.

The user terminal 2 may be a smartphone, a tablet, a PC, etc. like the warehouse owner terminal 1, and may be used by the owner of goods, that is, a warehouse user.

It has been described that the classification information is generated by classifying the warehouse information stored in the blockchain for each area. The classification information may be generated by one or more of the warehouse owner terminal 1, the user terminal 2, the operator terminal 3 to be described later, and the transporter terminal to be described later. A data block including the classification information may be registered or stored in the blockchain.

The user terminal 2 may receive the classification information and output the received classification information through an output module (e.g., a display device).

More specifically, the present system may further include the operator terminal 3, that is, a node of the blockchain. The operator terminal 3 may be a terminal that is used by an operator (or a manager) in the present system.

In this case, one or more of the warehouse owner terminal 1, the user terminal 2, and the operator terminal 3 may generate a data block including map information in which multiple areas are indicated, and may store the data block in the blockchain.

In this case, the user terminal 2 may include an output unit (an element corresponding to the output module) configured to receive and output the map information, an input unit (an element corresponding to the input module) configured to receive a selection signal that selects any one (hereinafter referred to as a "first area") of multiple areas from the map information and generate selection information, and a matching unit configured to receive the selection information and transmit, to the output unit, classification information corresponding to the any one (i.e., the first area) of the multiple areas.

The output unit receives and outputs the classification information. Since the classification information includes warehouse information for each area, warehouse information of the first area included in the output information may be output (refer to S2 in FIG. 3 and FIG. 4).

As described above, the present system includes the user terminal 2 configured to output warehouse information for each area. Accordingly, there is an advantage in that a user can check a state of a warehouse for each area and whether the warehouse is available.

In particular, there is an advantage in that a user can select an area in a map and check warehouse information because the user terminal 2 includes the output unit, the input unit, and the matching unit.

As described above, the classification information may be generated by one or more of the warehouse owner terminal 1, the user terminal 2, the operator terminal 3, and the transporter terminal. There is an advantage in that a warehouse owner, an operator, etc. can also simultaneously check warehouse information for each area because the warehouse information is stored in the blockchain.

In the present system, various types of information including warehouse information are distributed and stored in nodes of the blockchain. Accordingly, there is an advantage in that the present system does not require a central server unlike a financial institute and has excellent security because the falsification/tampering of data by hacking are difficult.

The user terminal 2 may further include a reservation unit configured to receive reservation information about the use of a warehouse from the input unit, generate a data block including the reservation information, and store the data block in the blockchain.

The reservation information may include information, such as warehouse information including the identification number of a warehouse, a time zone, user personal data, a storage item, and a payment status.

The present system includes the reservation unit as described above, and thus has an advantage in that a user can reserve a warehouse by checking a warehouse state for each area. Furthermore, as described above, reservation information is stored in the blockchain. Accordingly, there is an advantage in that nationwide warehouse owners can also use such data because they can check a warehouse reservation status for each area.

Furthermore, there is an advantage in that a transporter can check reservation information and warehouse information in real time because a transporter terminal that is used by the transporter and that is another node 4 of the blockchain to be described later can also output the reservation information.

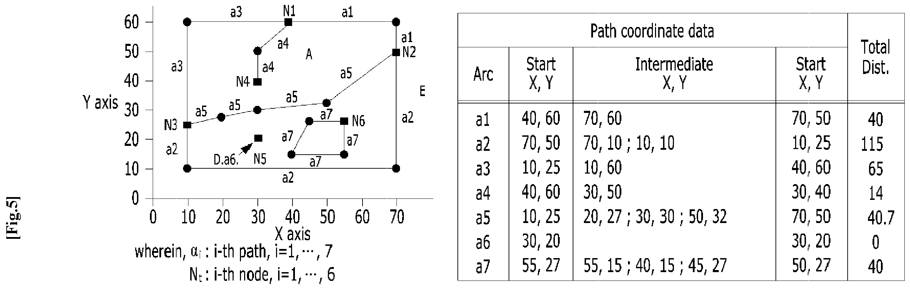

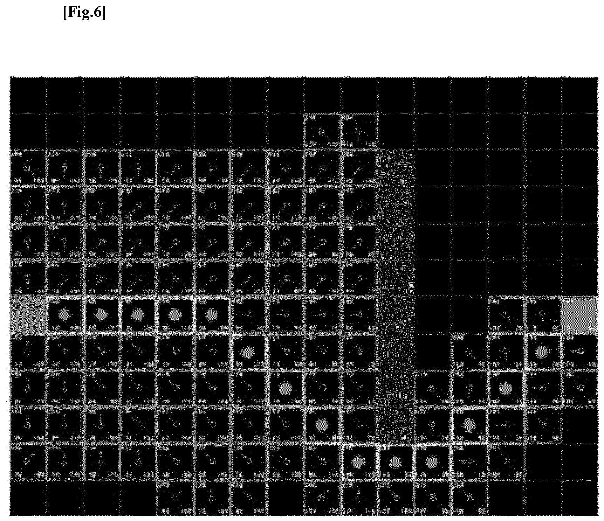

FIG. 5 is a diagram for describing a process of calculating, by a calculation unit, a moving distance. FIG. 6 is a diagram for describing an A-star algorithm.

Referring to FIGS. 1 to 6, one or more of the warehouse owner terminal 1, the user terminal 2, and the operator terminal 3 may include the calculation unit configured to calculate a moving distance by using the warehouse information and source location information that is received from the user terminal 2.

The calculation unit may convert a geographic information system (GIS)-based path network into coordinate data by applying a linear/square/oval model thereto, and may calculate a distance from a source to a destination (i.e., a warehouse location) by introducing the concept of an intelligent transport system (ITS).

The GIS is a computer system for capturing, storing, querying, analyzing, and displaying geographic space data.

The calculation unit may visualize a map by using a stochastic set-covering method.

The calculation unit may search for an optimal vehicle path for each warehouse by receiving requirement information from the user terminal 2 that is used by the owner of goods (or a user) and assigning (an area allocation algorithm) an area by taking the requirement information into consideration.

Furthermore, the calculation unit may search for an optimal path from a source to a target area by using the A-star algorithm.

That is, the calculation unit may calculate a moving distance by using source location information that is received through the input unit of the user terminal 2 and information on a location (target area) of a warehouse that is included in warehouse information.

Furthermore, the calculation unit may calculate the transportation expenses by using the moving distance and operating expenses for a cargo vehicle.

The calculation unit may calculate a moving distance (an optimal moving distance) from a source to a target area through one or more of the GIS, the ITS, the stochastic set-covering method, the A-star algorithm, and the area allocation algorithm, and may calculate transportation expenses by using the moving distance and operating expenses for a cargo vehicle.

For example, the calculation unit may calculate the transportation expenses by taking into consideration a moving distance of 3 km from a source to a target area, fuel and labor costs (i.e., operating expenses) for a cargo vehicle per 1 km in a specific time zone, etc.

Likewise, information including the moving distance and the transportation expenses may be stored in the blockchain.

One or more of the warehouse owner terminal 1, the user terminal 2, and the operator terminal 3 may generate recommendation information that recommends any one of multiple warehouses by using the transportation expenses and the warehouse information. The user terminal 2 may receive the recommendation information and output the received recommendation information through the output unit (or the output module).

The recommendation unit may calculate the final cost by adding up the transportation expenses and a use fee included in the warehouse information, and may recommend a warehouse having the smallest final cost.

Accordingly, there is an advantage in that a user (or the owner of goods) can reserve a warehouse by taking costs into consideration.

The transporter terminal that participates as another node may also include the calculation unit and the recommendation unit.

The present system (e.g., one or more of the warehouse owner terminal 1, the user terminal 2, and the operator terminal 3) can prepare for high traffic attributable to the processing of multiple pieces of warehouses information by designing a server (i.e., a node of the blockchain) as quartization high-availability architecture (Scale Out method). That is, when a failure occurs in one availability zone, it is possible to maximize recovery from failure and increase operational efficiency by dividing the functions by allocating them to operation, development, and test areas.

Furthermore, the present system (e.g., one or more of the warehouse owner terminal 1, the user terminal 2, and the operator terminal 3) can prevent a server obstacle by automatically expanding or reducing the server based on user traffic by using an auto scale.

Furthermore, the present system (e.g., one or more of the warehouse owner terminal 1, the user terminal 2, and the operator terminal 3) can improve a data access speed by regularizing (a CloudFront function) data that is received when a user accesses data so that the received data can be received in the form of a smoother structure by dividing the received data into network area layers.

Furthermore, the present system (e.g., one or more of the warehouse owner terminal 1, the user terminal 2, and the operator terminal 3) can prevent a data loss problem by distributing, backing up, and storing data into several servers and recovering data by using an Amazon RDS design.

Furthermore, the present system (e.g., one or more of the warehouse owner terminal 1, the user terminal 2, and the operator terminal 3) can provide notification and subscription services when generating reservation information by using Amazon SQS.

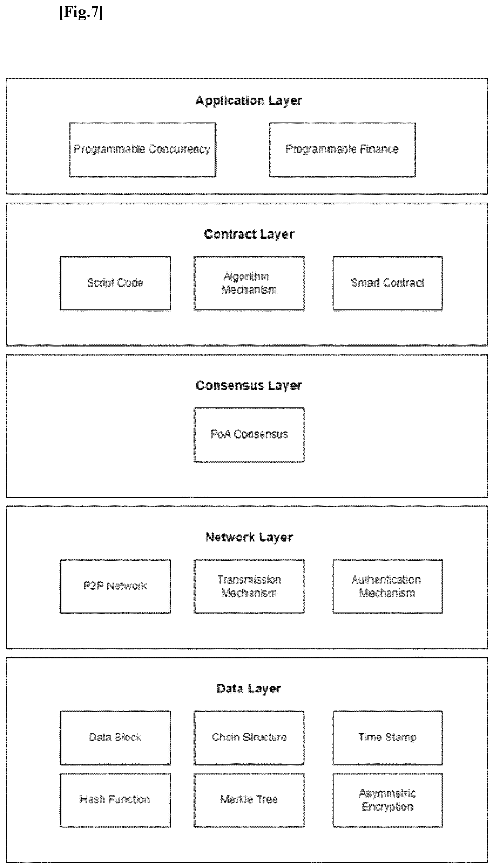

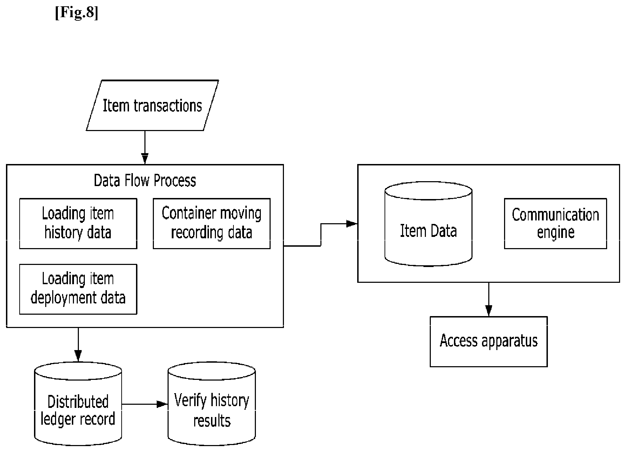

FIG. 7 is a diagram for describing layers of the blockchain. FIG. 8 is a schematic flowchart for describing data within the blockchain and that the data is transmitted to an access apparatus.

The existing distribution blockchain was fabricated as a hyperledger fabric-based permissioned blockchain. In foreign countries, the number of nodes that are stably driven is four to a maximum of eight on average because the scalability of an individual server of the hyperledger fabric is low. In large scale services, there is a problem in that customers cannot be flexibly accommodated depending on the volume of the customers.

Referring to FIGS. 1, 7, and 8, the present system (e.g., the operator terminal 3) adopts a Tendermint core engine as a blockchain construction engine in order to supplement a problem in the hyperledger fabric-based permissioned blockchain.

The Tendermint core engine may process several thousands of transactions per second. More specifically, the Tendermint core engine can reduce the time taken for a development task by several hundreds of hours by providing networking and consensus layers, that is, large structures of the blockchain, as a basic engine.

More specifically, the Tendermint core engine is connected to an application through an application blockchain interface (ABCI) socket protocol. A node helps the propagation of transactions, and inspects the validity of verifiers with respect to a new transaction to be added to the blockchain. The structure of the verifier is determined by the application. In the present system, a private proof-of-authority blockchain is constructed by using some verifiers that have been previously determined. In the present system, a data block is constructed as a permissioned blockchain which can be managed by only permissioned users.

The present system may include a total of five layers, including a data layer, a network layer, a consensus layer, a smart contract layer, and an application layer.

The data layer is a layer in which a basic data block and a related data encryption technology have been encapsulated. In general, each data block includes a block head and a block body. The block head is connected to the block body by capsulating a hash value of a previous block. The block body includes several pairs of transaction information of a current block.

The network layer includes a network mode (P2P distributed network), data transport protocol, and verification mechanism of the present system.

The consensus layer includes a consensus mechanism for verifying computing performance and a work load of a node. In the present system, the blockchain proves a work load of a node by using a PoA consensus algorithm.

The smart contract layer operates a blockchain transaction protocol and a data block. The results of transaction information by a transport company, a user, a transport driver, a warehouse owner, an operator, etc. are shared through a smart contract.

The application layer manages and tracks data in real time while operating in conjunction with the blockchain and a program (e.g., the warehouse owner terminal 1, the user terminal 2, or the operator terminal 3).

As described above, the blockchain of the present system has an advantage in that processing efficiency for many data blocks is improved because the blockchain is constructed through the Tendermint core engine.

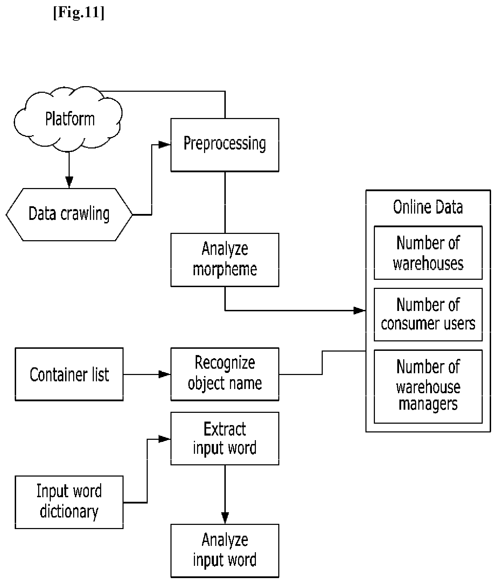

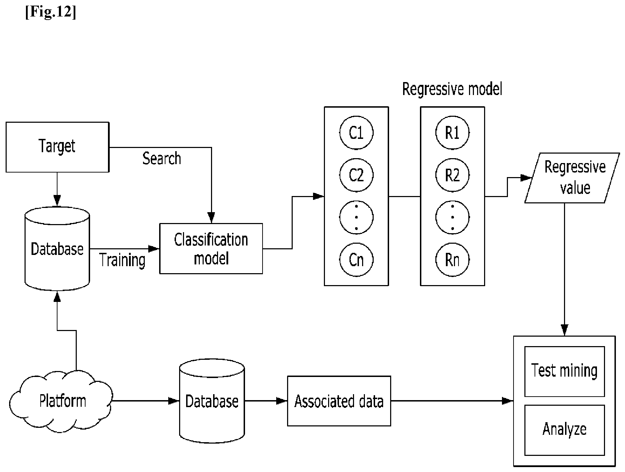

Referring to FIGS. 1, 11, and 12, the recommendation unit may generate detailed recommendation information that recommends any one of multiple warehouses by using the warehouse information and user information through a preset artificial intelligence (AI) algorithm.

More specifically, the plurality of user terminals 1 may generate a data block including user information including a profile of a user, text input information, a purchase history, reservation information, or evaluation information of a warehouse, and may store the data block in the blockchain.

In this case, the profile of the user means identification information (e.g., a name, an age, or a telephone number) of the user. The text input information means text input by the user through the input unit of the user terminal. Furthermore, the purchase history means a history that the user has purchased goods by connecting to the Internet through the user terminal of the user.

The evaluation information of the warehouse may mean a grade, a star review, etc. as a postscript after the warehouse is used.

The text input information may be generated by Equation 1 of a term frequency - inverse document frequency (TF-IDF).

[Equation 1]

$$TF - IDFscore(w_{ij}) = TF_{ij} * IDF_i$$

In Equation 1, the TF refers to term frequency, and is a value indicating how frequent a specific word is in a document. As the value becomes higher, the specific word may be considered important in the document. The value is calculated by Equation 2.

[Equation 2]

$$TF_{ij} = \frac{f_{ij}}{max_k f_{kj}}$$

However, if a word itself is frequently used in a document group, this may mean that the word commonly appears. This is called document frequency (DF). A reciprocal of the DF is called inverse document frequency (IDF) (calculated by Equation 3). The TF-IDF is a value obtained by multiplying the TF and the IDF.

[Equation 3]

$$IDF_i = log_e \frac{N}{n_i}$$

The TF-IDF is known, and a more detailed description thereof is omitted.

The recommendation unit may generate classification information by classifying user information for each type through the preset AI algorithm, may generate detailed recommendation information that recommends any one of multiple warehouses by using the classification information, the user information, and the warehouse information, and may store the detailed recommendation information in the blockchain.

For example, the recommendation unit may classify user information by classifying purchase histories for each type. For example, the recommendation unit may generate the classification information by classifying users who have chiefly purchased food and users who have chiefly purchased clothing.

After classifying users for each type, the recommendation unit may classify evaluation information for each type by matching the evaluation information of the users for each type.

Accordingly, when a new user subsequently uses the present system, the recommendation unit may generate detailed recommendation information that recommends any one of multiple warehouses by classifying the new user for each type based on a purchase history of the new user, extracting evaluation information matched with the classification information, and predicting an evaluation of the warehouses by the new user.

For example, the recommendation unit may generate the detailed recommendation information by predicting an evaluation of a warehouse by a user through Equation 4.

[Equation 4]

$$r_{xi} = \frac{\sum_{y \in N} S_{xy} r_{yi}}{\sum_{y \in N} S_{xy}} \quad S_{xy} = sim(x, y)$$

In Equation 4, $r_x$ is an evaluation vector of a user x. Assuming that N is k similar user sets that have evaluated an item i (warehouse), an evaluation of the warehouse by a user can be predicted.

Equation 4 is known, and a more detailed description thereof is omitted.

The AI algorithm that includes the equations and that is used by the recommendation unit is commonly used in various fields, a more detailed description thereof is omitted.

The present system has an advantage in that it can recommend a warehouse more suitable for a user among multiple warehouses by generating detailed recommendation information that recommends any one of the multiple warehouses based on classification information, user information, warehouse information, etc. as described above.

Hereinafter, a method of using a warehouse (hereinafter referred to as "the present method") according to an embodiment of the present disclosure is described. However, the present method is a method of using a warehouse using the present system, and includes technical characteristics that are identical with or correspond to those of the present system. Accordingly, an element identical with or similar to the aforementioned element is assigned the same reference numeral, and a redundant description thereof is simply given or omitted.

Referring to FIGS. 1 to 3, the present method includes step S1 of generating a data block including warehouse information through the warehouse owner terminal 1 and storing the data block in the blockchain, and step S2 of outputting classification information generated by classifying a plurality of pieces of warehouse information for each area through the user terminal 2.

Referring to FIGS. 1 to 4, the present method may include step S21 of outputting map information through the output unit, step S22 of generating selection information that selects any one of multiple areas from the map information through the input unit, step S23 of receiving the selection information and outputting, to the output unit, classification information corresponding to any one of the multiple areas through the matching unit, and step S24 of outputting the classification information through the output unit of the user terminal 2.

The present method may include step S30 of generating a data block including reservation information on the use of a warehouse through the reservation unit and storing the data block in the blockchain.

Furthermore, the present method may include step S40 of calculating a moving distance by using the warehouse information and source location information that is received from the user terminal 2 and calculating transportation expenses by using the moving distance and operating expenses for a cargo vehicle, through the calculation unit.

Furthermore, the present method may include step S50 of recommending any one of multiple warehouses by using the transportation expenses and the warehouse information through the recommendation unit.

The present method includes step S3 of recommending any one of multiple warehouses by using the user information and the warehouse information.

Step S3 may be performed by the recommendation unit. Detailed recommendation information that recommends any one of the multiple warehouses by using the user information and the warehouse information may be generated.

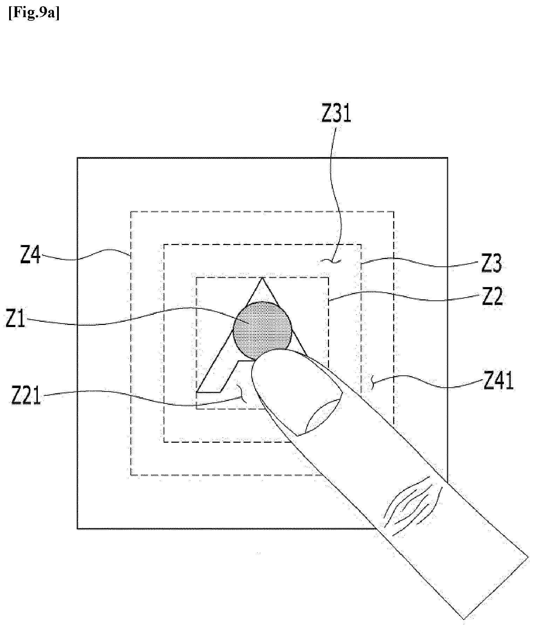

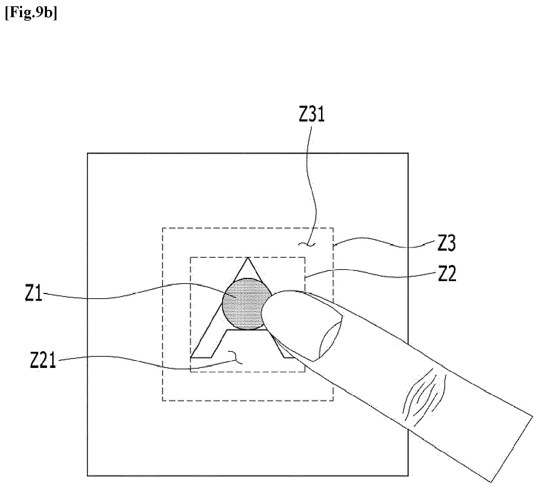

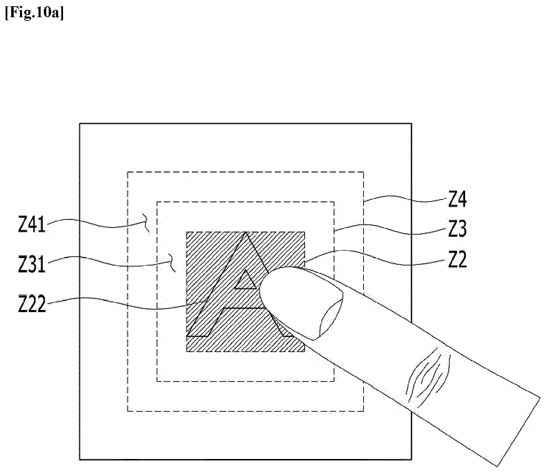

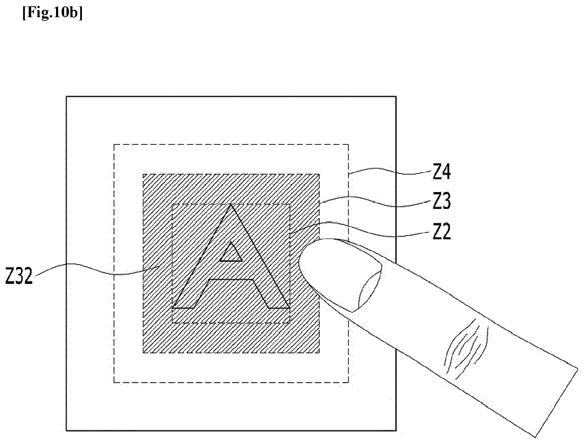

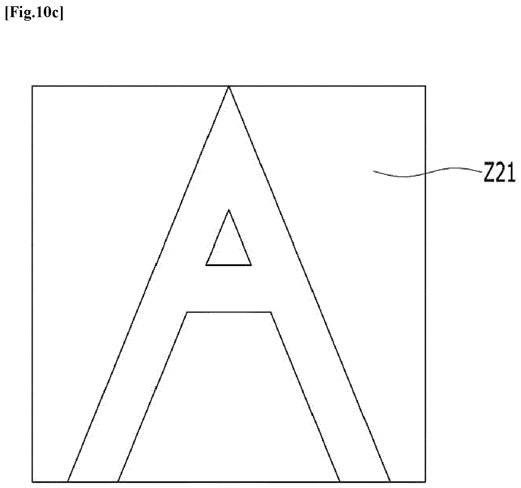

FIG. 9 is a diagram for describing the state in which dotted lines are output in an additional embodiment of the present disclosure. FIG. 10 is a diagram for describing filling icons in an additional embodiment of the present disclosure.

Referring to FIGS. 1, 4, 9, and 10, a user of the user terminal 3 may want to enlarge and watch a specific part of a terminal screen (i.e., the output module) in detail. For example, if the user wants to enlarge and watch warehouse information (e.g., the specific part "A" in FIG. 9) in the output terminal screen, the user may need to enlarge an area that includes the warehouse information as much as possible.

In particular, elderly people who suffer from presbyopia may need to enlarge a specific area.

In order to satisfy such a need, the user terminal 3 may include a client (or the client may be installed in the user terminal 3) that includes an enlargement interface for enlarging an area selected in a terminal screen.

Conventionally, if a specific area is to be enlarged, there is used a method of adjusting the size of a screen by tapping on a touch screen (or a terminal screen) several times or adjusting the distance between two fingers (e.g., the thumb and the forefinger) in the state in which the touch screen has been touched by the two fingers.

If the touch screen is tapped on several times, there is often a case where a part to be enlarged and watched cannot be checked in one screen because another part is enlarged in addition to the part to be enlarged and watched. Accordingly, an operation of moving a screen has to be performed.

Furthermore, if the distance between two fingers is adjusted in the state in which the touch screen has been touched by the two fingers, there is a problem in that it is difficult for a user to hold a terminal (e.g., a smartphone).

Furthermore, a terminal having a large size is recently used. In particular, there is a problem in that it is difficult for a user with a small hand size to enlarge a specific part of the terminal with his or her one finger while holding the terminal.

The enlargement interface is for overcoming the problems with the conventional method. The enlargement interface enables an area that is to be enlarged and watched to be output to one screen, but enables the area to be enlarged by using one finger. That is, the enlargement interface enables a desired specific part to be enlarged, but enables a terminal to be more easily held in order to effectively prevent damage to the terminal, etc.

Hereinafter, the enlargement interface is more specifically described. Referring to FIG. 9, if an arbitrary point on the terminal screen is touched (e.g., the terminal screen is touched by a finger, etc.) and the touch state is maintained for a preset time (e.g., three seconds), the enlargement interface outputs a start point Z1. After the touch on the start point Z1 is released, when the start point Z1 is re-touched (or touched again) after a preset time (e.g., three seconds), the enlargement interface may output an inner dotted line Z2 that surrounds the start point Z1.

In contrast, after the touch on the start point Z1 is released, when the start point Z1 is retouched within a preset time or another point on the terminal screen other than the start point Z1 is touched, the start point Z1 may be deleted.

Furthermore, when the touch on the start point Z1 is maintained for a preset time after the inner dotted line Z2 is output, the enlargement interface may output an outer dotted line Z3 that surrounds the inner dotted line Z2.

In this case, forms of an inner region Z21 that is formed by the inner dotted line Z2 and an outer region Z31 that is formed by the outer dotted line Z3 may correspond to forms in which the terminal screen has been reduced.

As in FIG. 9b, when the touch on the start point Z1 is maintained for more than a preset time after the outer dotted line Z3 is output, the enlargement interface may output the outermost dotted line Z4 that surrounds the outer dotted line Z3. That is, the number of dotted lines that are output over time when the start point Z1 is touched is not limited.

Referring to FIG. 9 and FIG. 10a, when a first point within the inner region Z21 (e.g., an arbitrary point within the inner zone Z21) is touched for more than a preset time (e.g., three seconds), the enlargement interface may output a first filling icon Z22 that covers the inner zone Z21.

Furthermore, when the first point is dragged to a zone (hereinafter referred to as a "neutral zone") between the inner dotted line Z2 and the outer dotted line Z3 (i.e., a finger that touches a terminal screen, such as a touch screen, is dragged in the state in which the finger has touched the terminal screen), the enlargement interface may output a second filling icon Z32 that covers the outer zone Z31.

Likewise, when a neutral zone between the inner dotted line Z2 and the outer dotted line Z3 is dragged to a neutral zone between the outermost dotted line Z4 and the outer dotted line Z3 in the state in which the outermost dotted line Z4 has been output, the enlargement interface may output a third filling icon.

The filling icon (i.e., the first filling icon Z22 or the second filling icon Z32) may have a translucent color, for example.

When a neutral zone between the inner dotted line Z2 and the outer dotted line Z3 is dragged to the inner zone Z21 after the second filling icon Z32 is output, that is, in the state in which the neutral zone has been touched, the second filling icon Z32 may be deleted, and the first filling icon Z22 may be output.

If the first filling icon Z22 has been output (refer to FIG. 10a), a touch on the first filling icon Z22 is released and the first filling icon Z22 is retouched. Accordingly, the enlargement interface may enlarge the inner zone Z21 by preset magnification (refer to FIG. 10c).

If the second filling icon Z32 has been output (refer to FIG. 10b), a touch on the second filling icon Z32 is released and the second filling icon Z32 is retouched. Accordingly, the enlargement interface may enlarge the outer zone Z31 by preset magnification.

In this case, the preset magnification may be magnification (e.g., twice or three times) at which the size of a zone (e.g., the inner zone Z21 or the outer zone Z31) selected in the terminal screen is maximized within the limit that the zone may be output to one screen.

The present system has an advantage in that a user can enlarge a specific zone with only his or her one finger in the state in which the user has held a terminal with his or her one hand although the size of a terminal is large and the size of a hand that holds the terminal is small because the present system includes the enlargement interface as described above.

More specifically, a zone to be enlarged can be previewed through only a movement of one finger by outputting dotted lines by only an operation of adjusting the time taken for a touch on one start point Z1 to be maintained and touching/re-touching (or touching again) a screen by using only one finger.

Furthermore, the start point Z1 is an arbitrary point that is selected by a user in the terminal screen. Accordingly, a specific part to be enlarged can be set by touching the specific part by using only one finger in the state in which a terminal has been held. Accordingly, there is an advantage in that a separate operation for operating the enlargement interface is not necessary because a separate start icon for generating the start point Z1 is not necessary.

Furthermore, the start point Z1 is output only when a touch state is maintained for a preset time after the first touch as described above. Accordingly, a malfunction that one part is enlarged because a terminal screen is touched due to an unwanted operation can be prevented. After checking whether the inner dotted line Z2 is output, a user may touch the start point Z1 again and then check whether the touch state has been maintained for more than a preset time.

Furthermore, in the state in which a malfunction has been prevented by the method, a user can easily enlarge, previously watch, and output a specific zone to be enlarged by outputting the outer zone Z31 in a way to only maintain a touch time for the start point Z1 without a process of releasing a touch on the start point Z1 and touching the start point Z1 again.

Furthermore, if the inner zone Z21 or the outer zone Z31 is to be enlarged, the inner zone Z21 or the outer zone Z31 can be enlarged as much as possible based on a shape of the terminal screen because the inner zone Z21 or the outer zone Z31 has a form in which the terminal screen has been reduced as described above. Accordingly, there is an advantage in that a user can previously which part of a specific part will be included in a zone to be enlarged (i.e., the inner zone Z21 or the outer zone Z31), before the inner zone Z21 or the outer zone Z31 is enlarged.

That is, a part to be enlarged when the inner zone Z21 is output may not be fully included in the inner zone Z21, which can be checked by a user through the inner zone Z21 in which a form of a terminal has been reduced. Accordingly, the output of the outer zone Z31 can be induced by further increasing a touch on the start point Z1.

Furthermore, it has been described that a zone (e.g., the inner zone Z21 or the outer zone Z31) to be output can be set through only an operation of dragging the first point to the neutral zone and an operation of dragging the neutral zone to the inner zone Z21. The neutral zone can be formed along the circumference of the terminal because the outer zone Z31 and the inner zone Z21 are zones reduced in the terminal screen, and the start point Z1 is disposed farther from the circumference of the terminal than the neutral zone. Accordingly, there is an advantage in that a zone to be output can be conveniently selected by only one finger because a movement to a convenient arbitrary point in the neutral zone is possible in the state in which the terminal has been held by using one hand.

Accordingly, there is an advantage in that the inner dotted line Z2 can be set as an enlarged zone without performing an operation of deleting the outer dotted line Z3 although the outer dotted line Z3 is output because the start point Z1 is unwantedly touched for a long time.

Furthermore, the specific part to be enlarged can be checked with the naked eye even after filling icons (e.g., the first filling icon Z22 and the second filling icon Z32) are output because the filling icons have a translucent color.

Furthermore, there is an advantage in that the enlargement of a zone selected due to a malfunction can be prevented because the inner zone Z21 or the outer zone Z31 is enlarged when a touch on filling icons is released and the filling icons are retouched.

The present disclosure that has been described above with reference to the accompanying drawings may be variously modified and changed by those skilled in the art, and such modifications and changes should be construed as being included in the scope of right of the present disclosure.

[Description of reference numerals]

| | |
|---|---|
| S: | blockchain-based warehouse use system |
| 1: | warehouse owner terminal    2:        user terminal |
| 3: | operator terminal |

**Claims**

1. An artificial intelligence (AI) and blockchain-based warehouse use system, the system using AI and a blockchain in which a plurality of nodes is connected over a communication network and comprising:

   a plurality of warehouse owner terminals each being a node of the blockchain and configured to generate a data block comprising warehouse information and store the data block in the blockchain; and
   a user terminal being a node of the blockchain and configured to output classification information generated by classifying, for each area, a plurality of pieces of warehouse information stored in the blockchain,
   wherein one or more of the warehouse owner terminal and the user terminal comprises a recommendation unit configured to recommend any one of multiple warehouses by using the warehouse information and user information.

2. The AI and blockchain-based warehouse use system of claim 1, further comprising an operator terminal being a node of the blockchain,

   wherein one or more of the warehouse owner terminal, the user terminal, and the operator terminal generates a data block comprising map information in which the multiple areas are indicated and stores the data block in the blockchain, and
   the user terminal comprises
   an output unit configured to receive and output the map information,
   an input unit configured to generate selection information that selects any one of the multiple areas from the map information,
   a matching unit configured to receive the selection information and transmit, to the output unit, the classification information corresponding to any one of the multiple areas, and
   a reservation unit configured to generate a data block comprising reservation information on a use of the warehouses and store the data block in the blockchain.

3. The AI and blockchain-based warehouse use system of claim 2, further comprising an operator terminal being a node of the blockchain,

   wherein each of the plurality of user terminals generates a data block comprising the user information comprising a profile of a user, text input information, a purchase history, the reservation information, and evaluation information for the warehouses and stores the data block in the blockchain,

one or more of the user terminal, the warehouse owner terminal, and the operator terminal comprises the recommendation unit, and

the recommendation unit generates the classification information by classifying the user information for each type and recommends any one of the multiple warehouses by using the classification information, the user information, and the warehouse information.

4. A method of using a warehouse using the AI and blockchain-based warehouse use system of claim 1, the method comprising:

step S1 of generating the data block comprising the warehouse information through the warehouse owner terminal and storing the data block in the blockchain;

step S2 of outputting the classification information generated by classifying the plurality of pieces of warehouse information for each area through the user terminal; and

step S3 of recommending any one of the multiple warehouses by using the user information and the warehouse information.

[Fig.1]

<u>S</u>

EP 4 231 188 A1

[Fig.2]

Integrated distribution system

Operator

Input data/
provide data

User

WEB/APP

WEB/APP
GET/UPDATE

Advertiser

1 STEP → 2 STEP → 3 STEP → F STEP

4D simulation

Select warehouse,
calculate distance/
location-based price

real-time query/
reservation in
warehouse system

Payment system

Warehouse
reservation
completed

⦿Credit card  ○Deposit without  ○Account
                    bankbook          transfer

○                ○

○syrup pay    ○PAYCO

Individual customer

TAX

Corporate customer

14

[Fig.3]

Collect DB for present nationwide warehouses conditions

Share data for present warehouse conditions in real time

Nationwide area warehouse reservation operation service

S1

S2

[Fig.4]

[Fig.5]

wherein, $\alpha_i$ : i-th path, i=1, ···, 7
$N_t$ : i-th node, i=1, ···, 6

| Arc | Path coordinate data | | | Total Dist. |
|---|---|---|---|---|
| | Start X, Y | Intermediate X, Y | Start X, Y | |
| a1 | 40, 60 | 70, 60 | 70, 50 | 40 |
| a2 | 70, 50 | 70, 10 ; 10, 10 | 10, 25 | 115 |
| a3 | 10, 25 | 10, 60 | 40, 60 | 65 |
| a4 | 40, 60 | 30, 50 | 30, 40 | 14 |
| a5 | 10, 25 | 20, 27 ; 30, 30 ; 50, 32 | 70, 50 | 40.7 |
| a6 | 30, 20 | | 30, 20 | 0 |
| a7 | 55, 27 | 55, 15 ; 40, 15 ; 45, 27 | 50, 27 | 40 |

[Fig.6]

[Fig.7]

**Application Layer**

Programmable Concurrency

Programmable Finance

**Contract Layer**

Script Code

Algorithm Mechanism

Smart Contract

**Consensus Layer**

PoA Consensus

**Network Layer**

P2P Network

Transmission Mechanism

Authentication Mechanism

**Data Layer**

Data Block

Chain Structure

Time Stamp

Hash Function

Merkle Tree

Asymmetric Encryption

[Fig.8]

[Fig.9a]

[Fig.9b]

[Fig.10a]

[Fig.10b]

[Fig.10c]

Z21

[Fig.11]

[Fig.12]

Regressive model

Target — Search

Database — Training — Classification model

Platform

Database — Associated data

C1, C2, ⋮, Cn

R1, R2, ⋮, Rn

Regressive value

Test mining

Analyze

Europäisches
Patentamt
European
Patent Office
Office européen
des brevets

## EUROPEAN SEARCH REPORT

Application Number

EP 22 18 6213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 503 362 A (SHENZHEN ZHENJIUKU TECH CO LTD; BEIJING FULIAN TECH CO LTD) 26 November 2019 (2019-11-26) | 1,4 | INV. G06F21/64 |
| A | * abstract * * paragraph [0001] – paragraph [0054] * * paragraph [0065] – paragraph [0115] * ----- | 2,3 | |
| A | CN 111 461 623 A (ALIPAY HANGZHOU INF TECH CO LTD) 28 July 2020 (2020-07-28) * the whole document * ----- | 1-4 | |
| A | WO 2022/029960 A1 (HITACHI TRANSPORT SYSTEM [JP]) 10 February 2022 (2022-02-10) * the whole document * ----- | 1-4 | |

TECHNICAL FIELDS
SEARCHED (IPC)

G06F
H04L
G06Q

The present search report has been drawn up for all claims

| Place of search | Date of completion of the search | Examiner |
|---|---|---|
| Munich | 17 May 2023 | Ghani, Hamza |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
..................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 22 18 6213

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2023

| Patent document cited in search report | | Publication date | Patent family member(s) | | Publication date |
|---|---|---|---|---|---|
| CN 110503362 | A | 26-11-2019 | NONE | | |
| CN 111461623 | A | 28-07-2020 | NONE | | |
| WO 2022029960 | A1 | 10-02-2022 | JP WO2022029960 | A1 | 10-02-2022 |
| | | | WO 2022029960 | A1 | 10-02-2022 |

For more details about this annex : see Official Journal of the European Patent Office, No. 12/82

**REFERENCES CITED IN THE DESCRIPTION**

**Patent documents cited in the description**

- KR 1020150066178